# EUROPÄISCHE PATENTANMELDUNG

(11) **EP 1 215 436 A2**
(43) Veröffentlichungstag der Anmeldung: **19.06.2002**
(21) Anmeldenummer: 01126070.0
(22) Anmeldetag: 02.11.2001
(51) Int. Cl.: F16L 55/38

(54) **Rohrleitungsmolch**

(30) Priorität: 12.12.2000 DE 20020990 U
(71) Anmelder: I.S.T. Industrie Service Technologie Beratungs-und Beteiligungsgesellschaft mbh, 22145 Hamburg (DE)
(72) Erfinder: Skibowski, Hubert, 79410 Badenweiler (DE)
(74) Vertreter: Patentanwälte Hauck, Graalfs, Wehnert, Döring, Siemons

(57) **Zusammenfassung**

Rohrleitungsmolch mit einem länglichen Molchkörper, bei dem
- beidseits eines Abschnitts kleineren Durchmessers (66) (Mittelteil) jeweils eine ringförmige, vorzugsweise ringzylindrische Dichtfläche (12, 14) vorgesehen ist, deren Außendurchmesser größer ist als der Innendurchmesser der zu molchenden Rohrleitung
- bei dem ferner ein Ringhohlraum (52, 54) annähernd radial innen von der Dichtfläche (12, 14) und zur Dichtfläche (12, 14) ausgerichtet in radialem Abstand zu dieser vorgesehen ist,
- wobei zumindest der den Ringhohlraum (52, 54) begrenzende und die Dichtfläche (12, 14) bildende zusammenhängende Abschnitt des Molchkörpers aus elastomerem Material geformt ist und wobei
- der Ringhohlraum (52, 54) und die Dichtfläche (12, 14) so angeordnet und ausgebildet sind, dass die Dichtfläche (12, 14) an einem ringförmigen Abschnitt (56) ausgebildet ist, der an zwei im Querschnitt stegförmigen nach innen weisenden Abschnitten (58, 60) angebunden und von diesen getragen ist und die axial und radial verformt werden, wenn die Dichtfläche (12, 14) mit einer Rohrwandung in Eingriff tritt.

## Beschreibung

Die Erfindung bezieht sich auf einen Rohrleitungsmolch nach dem Patentanspruch 1.

Aus DE 28 01 378 ist ein Rohrleitungsmolch bekannt geworden, bei dem die Dichtungsanordnungen aus zylindrischen Scheiben bestehen. Ein derartiger Molch ist ohne besondere Vorkehrungen nicht für den Zweiwegbetrieb geeignet. Zweiwegbetrieb bedeutet, dass der Molch in zwei Richtungen durch eine Rohrleitung geschickt wird, ohne dass der Molchkörper herausgenommen und gewendet wird. Aus DE 30 32 532 ist ein Rohrleitungsmolch bekannt geworden, der aus einem einteiligen Molchkörper aus elastomerem Vollmaterial geformt ist. Ringzylindrische axial beabstandete Dichtflächen sind am Molchkörper angeformt, wobei dieser zwischen den Dichtflächen eine konkave Einschnürung aufweist. An den Enden ist der Molchkörper ballig geformt. Mit Hilfe eines derartigen Rohrleitungsmolches können ohne Gefahr des Steckenbleibens in beiden Richtungen Rohrleitungen auch mit engen Bögen gefahren werden. Da ein derartiger Rohrleitungsmolch naturgemäß einem Verschleiß unterworfen ist, aufgrund einer oft unnötig hohen Pressung an die Rohrwand, muss er komplett entsorgt werden, wenn er nicht mehr das Mindestübermaß der Dichtflächen aufweist. Die Herstellung eines vollständig aus Elastomer oder geschäumtem Material (PU) bestehenden Rohrleitungsmolchs ist außerdem vom Verfahren, vom Material und von der Herstellung her aufwändig. Der bekannte Rohrleitungsmolch erfordert auch einen erheblichen Treibdruck, und somit eine nicht geringe Menge an gasförmigem Treibmittel, da Durchmesser und Härtetoleranzen variieren. Oft wird ein ungleichmäßiger Lauf registriert aufgrund eines Slip-Stick-Effektes.

Ein Rohrleitungsmolch gemäß EP 0 405 075 bildet insoweit eine Verbesserung des oben beschriebenen Molchs aus Vollmaterial, indem Lippen in den Molchkörper eingesetzt sind, die ggf. auch ersetzt werden können. Dadurch verschleißen lediglich die Lippen. Außerdem ist ein derartiger Rohrleitungsmolch leichtgängiger. Die Verwendung von Dichtlippen birgt jedoch die Gefahr, dass sie bei entsprechenden Treibdruckdifferenzen überklappen. Auch ist die Lage-Führung eines derartigen Molches in der Rohrleitung selbst nicht immer in wünschenswertem Maße stabil. Die Reinigungswirkung im Rohr und am Molch kann unbefriedigend sein.

Der Erfindung liegt die Aufgabe zugrunde, einen Rohrleitungsmolch zu schaffen, der bei wirksamem Reinigungsverhalten leichtgängig ist, weniger Treibmittel erfordert und eine längere Standzeit aufweist.

Diese Aufgabe wird durch die Merkmale des Patentanspruchs 1 oder 32 gelöst.

Bei dem Rohrleitungsmolch nach Patentanspruch 1 sind beidseits eines Abschnitts kleineren Durchmessers (Mittelteil) jeweils eine ringförmige Dichtfläche vorgesehen, die vorzugsweise ringzylindrisch ist. Der Außendurchmesser der Dichtflächen ist größer als der Innendurchmesser der zu molchenden Rohrleitung. Insoweit besteht Übereinstimmung mit der grundsätzlichen Formgebung des Rohrleitungsmolchs nach DE 30 32 532, wobei auch bei der Erfindung der Abstand benachbarter Dichtflächen gleich oder kleiner sein kann als der Innendurchmesser der Rohrleitung. Die Endflächen können von Kugelabschnitten gebildet sein, was jedoch nicht unbedingt Voraussetzung ist. Diese Bauart ermöglicht jedoch den Ersatz bisheriger Molche.

Erfindungsgemäß ist ein Ringhohlraum jeweils radial innerhalb der Dichtfläche vorgesehen, der annähernd zur Dichtfläche ausgerichtet ist in radialem Abstand zu dieser. Der den Ringhohlraum begrenzende und die Dichtfläche bildende zusammenhängende Abschnitt des Molchkörpers besteht aus elastomerem Material, wobei die Dichtfläche und der Ringraum so angeordnet und ausgebildet sind, dass die Dichtfläche an einem ringförmigen Abschnitt ausgebildet ist, der an zwei im Längsschnitt stegförmigen zur Längsmittelachse weisenden Abschnitten angebunden und von diesen getragen ist. Die stegartigen Abschnitte verformen sich axial und radial, wenn die Dichtfläche mit der Rohrwandung in Eingriff tritt. Man erhält mithin eine erhöhte Elastizität aufgrund eines Luftfedereffekts. Es versteht sich, dass statt eines durchgehenden Ringhohlraums auch Raumabschnitte verwendet werden können, die durch mehr oder weniger dicke Stege in Umfangsrichtung voneinander getrennt sind. Alternativ können auch einzelne Blasen oder ein Schaumgürtel unter den Dichtflächen vorgesehen werden anstelle eines durchgehenden Hohlraums.

Der erfindungsgemäße Rohrleitungsmolch vereinigt die Vorteile der oben beschriebenen bekannten Molche und vermeidet deren nachteilige Wirkungen. Eine Dichtfläche, wie sie in DE 30 32 532 offenbart ist, hat eine bessere Reinigungswirkung und verleiht dem Molch auch eine bessere Führung als Lippendichtungen, wie sie aus EP 405 075 bekannt geworden sind. Dadurch, dass radial innerhalb der Dichtflächen ein Ringhohlraum angeordnet ist, ergibt sich eine höhere Flexibilität bzw. Nachgiebigkeit in diesem Bereich. Bei gleichem Material lässt sich mithin eine höhere Nachgiebigkeit der Dicht- und Laufflächen erzielen bzw. mit einem festeren Material die gleiche Elastizität wie beim Molch aus Vollmaterial. Eine höhere Elastizität hat zur Folge, dass ein größerer Durchmesser für die Dichtflächen gewählt werden kann. Dadurch kann man größere Rohrleitungstoleranzen und Ovalitäten ausgleichen. Der Außendurchmesser der Dicht- und Lauffläche kann somit deutlich größer gewählt werden als zum Beispiel für einen Rohrleitungsmolch nach DE 30 32 532. Dadurch läßt sich eine deutlich längere Laufleistung erzielen. Ein weiterer Vorteil ist darin zu sehen, dass die radiale Nachgiebigkeit des erfindungsgemäßen Rohrleitungsmolches ein geringeres Treibmittelvolumen erfordert, da er mit einem geringeren Treibdruck vorgetrieben werden kann.

Bei dem Einsetzen des erfindungsgemäßen Rohrleitungsmolches in die Rohrleitung erfolgt eine radiale Kompression im Dichtflächenbereich, wobei die stegförmigen Abschnitte, welche die Dichtfläche tragen, sowohl radial als auch axial verformt werden, um der Reduzierung des Durchmessers der Dichtflächen nachgeben zu können. Wird ein Treibmitteldruck auf eine Endfläche des Molches aufgebracht, führt dies dazu, dass der stegförmige Abschnitt auf der Treibdruckseite von der Endfläche des Molchkörpers fort geschwenkt und abgesenkt wird, wodurch der andere der Einschnürung zugekehrte stegförmige Abschnitt eine Aufrichtung erfährt. Eine solche Aufrichtung führt zu einem erhöhten Andruck der Dichtfläche an der Rohrleitungswandung. Bei dem erfindungsgemäßen Molch wird mithin die Dichtwirkung durch den Treibmitteldruck beeinflusst und erhöht.

Da, wie erwähnt, beim erfindungsgemäßen Molch eine Anpressung/Durchmesserreserve möglich ist von z.B. 4 mm bei Nennweite 80, können auch größere Hindernisse, z. B. Schweißinnennähte, Rohrleitungstoleranzen und Ovalitäten, auch im Rohrbogen abgedeckt werden, ohne dass dadurch die Wirksamkeit der Reinigung leidet. Bei gleichem Treibdruck kann mithin eine höhere Anpressung erzielt werden, was umgekehrt bedeutet, dass bei etwas geringerer Vorspannung oder gleicher Vorspannung wie bei herkömmlichen Molchen ein deutlich geringerer Treibdruck verwendet werden kann. Im Betrieb sind Einsparungen von Molchzeiten möglich und Einsparung von Mengen an Treibmedium, z.B. N2 oder getrockneter Luft.

Da der Molchkörper des erfindungsgemäßen Molches im Bereich der Dichtflächen relativ flexibel ist, ist die Materialauswahl ebenfalls flexibler. Es kann zum Beispiel auch daran gedacht sein, neben Elastomeren auch härteres Material und PTFE einzusetzen.

Für die Realisierung des erfindungsgemäßen Rohrleitungsmolches ist eine Reihe von konstruktiven Möglichkeiten denkbar. Eine Ausgestaltung der Erfindung sieht vor, dass die stegförmigen Abschnitte radial nach außen konvergieren derart, dass beim Eingriff mit der Rohrwandung und beim Vortrieb der in Vortriebsrichtung vorn liegende stegförmige Abschnitt aufgerichtet und der andere entsprechend abgesenkt wird. Auf diese Weise wird mit Hilfe des Treibdrucks die Dichtwirkung des Molches verbessert.

Nach einer anderen Ausgestaltung der Erfindung sind der ringförmige Abschnitt und die stegförmigen Abschnitte Teile eines einteiligen Rings aus elastomerem Material, der im Querschnitt U-förmig ist, wobei die Enden seiner Schenkel im Molchkörper festgelegt sind, beispielsweise dadurch, dass die Schenkelenden eine wulstförmige Verdickung aufweisen, die zwischen scheibenförmigen Abschnitten des Molchkörpers axial eingespannt sind. Der manschettenartige Ring, der ein Verschleißteil darstellt, kann nach Abnutzung durch einen anderen ausgewechselt werden, wenn die Anbringung am Molchkörper lösbar gestaltet ist. Dadurch wird außerdem der Vorteil erhalten, dass übrige Teile des Molchkörpers bei Verschleiß der Dichtungsteile weiter verwendet werden können, wodurch der Aufwand für den Betreiber von molchbaren Rohrleitungen deutlich reduziert wird.

Ein ähnlicher Vorteil wird erfindungsgemäß erhalten, wenn der Molchkörper zwei identische Kappen aus elastomerem Material aufweist, welche zumindest einen Teil der Außenkontur des Molchkörpers definieren und jeder Kappe ein Stützabschnitt aus im Wesentlichen nicht verformbarem Material zugeordnet ist. Bei dieser Ausführungsform wird der Ringhohlraum innerhalb der und/oder von den Kappen ausgebildet. Auch bei dieser Ausgestaltung müssen nur Teile des Molchkörpers bei Verschleiß ausgewechselt werden. Der übrige Molchkörper kann wieder verwendet werden.

Die Verwendung von auswechselbaren Verschleißteilen hat noch weitere Vorteile als die oben angegebenen. Im Gegensatz zu einem Rohrleitungsmolch aus Vollelastomer wird bei der Verwendung von Manschetten oder Kappen ein geringeres Dehn- und Quellvolumen erzielt. Aufgrund der Einwirkung bestimmter Stoffe kann geschehen, dass das Elastomer eine Aufquellung erfährt. Es versteht sich, dass die Aufquellung um so signifikanter ist, je mehr Volumen an Elastomermaterial vorhanden ist. Ein weiterer Vorteil von kleinvolumigen auswechselbaren Verschleißteilen führt zu einer Verringerung des Herstellungsaufwands, insbesondere der Fertigungszeiten. Bekanntlich müssen Teile aus einem elastomeren Material in Formen hergestellt werden, in denen die Vulkanisation des Materials stattfindet. Die Vulkanisations- und Abkühlzeiten sind naturgemäß abhängig vom Volumen des herzustellenden Teils. Werden lediglich Kappen aus Elastomer für den Molch hergestellt, führt das zu deutlich reduzierten Fertigungszeiten im Verhältnis zu einem Molch aus Vollmaterial.

Die Kappen sind vorzugsweise lösbar am Molchkörper angebracht. Es ist zwar denkbar, die Kappen anzukleben. Dafür ist jedoch die Entfernung beim Auswechseln mit einem gewissen Aufwand verbunden. Die Kappen sind an einem Stützabschnitt oder einem Stützkörper angebracht. Der Stützkörper kann ein massiver Kern aus einem geeigneten Kunststoffmaterial oder einer Leichtmetalllegierung sein, der entsprechende Mittel aufweist zur Anbringung der Kappen. Ein Mittel kann zum Beispiel eine radiale Erhebung am Stützabschnitt bzw. am Stützkörper sein, die von radial innen her in den Ringhohlraum eingreift und dadurch die Kappen gegen eine axiale Relativbewegung sichert. Die Stützabschnitte können nach einer weiteren Ausgestaltung der Erfindung scheibenförmig sein und mittels eines Hinterschnitts in den Ringraum eingreifen. In diesem Fall umgreift die Kappe den Stützabschnitt mit einem radial nach innen weisenden Flanschabschnitt, wobei Flanschabschnitt und Stützabschnitt Teile aufweisen, die formschlüssig ineinander greifen, um die Kappe wirksam am Stützabschnitt zu halten. Die Stützabschnitte des Molchkörpers können miteinander verbunden sein, um einen Stützkörper zu bilden. Zu diesem Zweck können nach einer Ausgestaltung der Erfindung die Stützabschnitte achsmittige Gewindebohrungen aufweisen, in die ein Gewindestift eingeschraubt ist, so dass die Stützabschnitte schraubend aufeinander zu bewegbar sind zur klemmenden Festlegung der Kappen auf den Stützabschnitten. Die Endstellung kann dadurch hergestellt werden, dass Abschnitte der Stützscheiben, insbesondere axiale Bunde der Stützabschnitte, gegeneinander zur Anlage kommen, wenn die Stützscheiben ausreichend weit aufeinander zu gedreht worden sind. In dieser Position wird dann eine ausreichende Spannung auf die aneinander grenzenden Teile der Kappen erhalten, so dass sie mit den Stützabschnitten oder einem dazwischen liegenden Abschnitt klemmend und dichtend in Eingriff gelangen.

Bei Verwendung eines einteiligen Stützkörpers, z.B. aus Vollmaterial, beispielsweise aus Kunststoff oder einem metallischen Material, kann dieser auch die Endflächen des Molchkörpers bilden, so dass die Kappen annähernd Ringform annehmen. Der Stützkörper kann radiale Flansche aufweisen oder es können Flansche an diesen angeformt sein, die jeweils von radial innen in einen Ringraum eingreifen, um die Kappen auf dem Stützkörper axial zu sichern. Zur zusätzlichen Sicherung können im Stützkörper konzentrisch zur Längsachse des Molchkörpers Ringnuten geformt sein, in die ein ringförmiger radial nach innen weisender Abschnitt der Kappe annähernd passend eingreift.

Statt eines massiven Stützkörpers kann bei großen Durchmessern auch ein hohler Stützkörper vorgesehen werden, der hohlzylindrisch ausgebildet ist und z.B. ebenfalls mit radialen Erhebungen versehen sein kann, die in die Ringräume eingreifen zur axialen Sicherung der Kappen. Ein derartiger Stützkörper kann aus einem geeigneten verschweißbaren Metall bestehen, beispielsweise aus Edelstahl.

Aus EP 405 075 ist auch bekannt, im Molchkörper Permanentmagnete unterzubringen. Sie dienen dazu, einen Molch in der Rohrleitung zu signalisieren/melden. Er kann mit einem entsprechenden Magnetfeldinitiator oder -melder erfasst werden, beispielsweise in einer Molchstation. Bei dem bekannten Rohrleitungsmolch sind die Permanentmagnete in Taschen angeordnet, die in den Boden von Ringnuten geformt sind, welche ihrerseits die Dichtungslippen aufnehmen. Hierbei besteht die Gefahr, dass bei einer Beschädigung/Zertrümmerung des Molchs in der Rohrleitung die Magnete herausgerissen oder zertrümmert werden und dadurch den Betrieb der Rohrleitung und Armaturen beeinträchtigen. Eine Ausgestaltung der Erfindung sieht vor, den Molchkörper so auszuführen, dass die Permanentmagnete bei einer Zerstörung des Molchs gesichert sind. Eine Ausgestaltung der Erfindung sieht ferner vor, dass von den Stützabschnitten bzw. dem Stützkörper ein Magnethalter gehalten wird, der vorzugsweise symmetrisch zur Quermittelebene des Molchkörpers angeordnet ist und mehrere einzelne Permanentmagnete oder Ringmagnete hält, die in gleichmäßigen Abständen auf einem Kreis konzentrisch zur Längsmittelachse des Molchkörpers auf der Längsmitte angeordnet sind. Mit Hilfe eines solchen Magnethalters können die Permanentmagnete relativ weit an den Außenumfang des Molchkörpers zur sicheren Kontaktgebung herangebracht werden, ohne Gefahr zu laufen, dass die Magnete zerstört werden, wenn es zu einer Zerstörung oder Teilzerstörung des Molches kommt.

Es sind verschiedene konstruktive Ausgestaltungen für die Realisierung des Magnethalters denkbar. Der Magnethalter kann zum Beispiel ringförmig sein und in einer Ringnut des Stützkörpers sitzen. Er kann dabei von einem den Magnethalter umgebenden Haltering gesichert sein. Der Magnethalter kann zum Beispiel von zwei schalenförmigen im Querschnitt ein seitliches U bildenden Ringen aus amagnetischem Material gebildet sein, die gegeneinander liegen und in mehreren in Umfangsrichtung beabstandeten Taschen Permanentmagnete aufnehmen. Eine derartige Anordnung kann nach einer weiteren Ausgestaltung der Erfindung zwischen zwei Kappen des Magnetkörpers eingespannt sein.

Bei Verwendung eines hohlzylindrischen Stützkörpers kann der Magnethalter innerhalb des Hohlzylinders angeordnet werden, in dem die Magnete besonders wirksam gegen zerstörende Einwirkungen gesichert sind.

Nach einer anderen Ausgestaltung der Erfindung kann ein axialer Abschnitt der Stützabschnitte mit einem mittleren Abschnitt des Magnethalters in formschlüssigem Eingriff sein. Auf diese Weise ist der Magnethalter wirksam im Molchkörper gehalten. Der Magnethalter kann in einem radial äußeren Abschnitt schwalbenschwanzförmig geformt sein und die benachbarten Abschnitte einer Kappe aus elastomerem Material können komplementär geformt sein, so dass die Kappe durch den Magnethalter an Ort und Stelle gehalten ist.

Eine alternative Aufnahme von Magneten in einem Magnethalter sieht erfindungsgemäß vor, dass der Magnethalter von einer Seite zugängliche achsparallele Taschen für die Permanentmagnete aufweist, die in einem gleichmäßigen Abstand auf einem Kreis konzentrisch zur Längsachse des Molchkörpers gleichpolig angeordnet sind und die Permanentmagnete in den Taschen nach der Montage von Verschlussstopfen und/oder einem Abschnitt der zugeordneten Kappe axial gesichert sind.

Nach einer weiteren Ausgestaltung der Erfindung kann der ringförmige Magnethalter auf gegenüberliegenden Seiten sich axial nach außen erstreckende Ringflansche aufweisen, die in komplementäre Ringnuten der Kappen eingreifen. Die Flansche sind mit einer Zahnung versehen, die mit dem Grund der Ringnuten zusammenwirken. Vorzugsweise ist eine Sägezahnung vorgesehen, wobei die flachen Zahnflanken in Drehrichtung des Gewindeschafts weisen. Beim Zusammenschrauben der Stützabschnitte mit den Kappen läßt sich die Zahnung relativ leicht gegenüber dem Nutengrund vorbewegen, bis es zu einem entsprechenden Kraftschluß zwischen Zahnung und Nutgrund kommt. Ein Lösen in umgekehrter Richtung ist gegen die steileren Flanken vorzunehmen, wodurch eine wirksame Drehsicherung erhalten wird. Damit eine ausreichende Abdichtung für den Molch geschaffen ist, sieht eine weitere Ausgestaltung der Erfindung vor, daß die ringförmige im Querschnitt vorzugsweise dreieckförmige äußere Kante der Ringnuten in eine komplementäre Ringnut des Magnethalters dichtend eingreifen.

Ein außen liegender Ringbereich des Magnethalters oder eines Halteringes für den Magnethalter kann mit einer Codierung versehen werden. Da der Aufbau der Molche gleich ist, kann es zweckmäßig sein, diesen individuelle Kennzeichen zuzuordnen. Dadurch kann festgestellt werden, um welchen Molch es sich handelt, der sich zum Beispiel in einer Empfangs- oder Sendestation befindet.

Werden die die Dichtfläche bildenden Teile des erfindungsgemäßen Molches, z.B. die Kappen oder die manschettenartigen Ringe aus einem relativ harten wenig elastischen Material hergestellt, kann es von Vorteil sein, wenn der Ringraum seinerseits elastische Eigenschaft erhält. Dies kann etwa dadurch geschehen, dass ein Gas unter Druck in den Ringraum eingefüllt wird oder auch dadurch, dass in den Ringraum ein Ring aus elastomerem Material eingelegt wird. Diese Ausführungsform ist besonders von Vorteil bei der Verwendung von zum Beispiel PTFE für die Dichtungsabschnitte des Molches.

Bei einer anderen Lösung der der Erfindung zugrunde liegenden Aufgabe gemäß Patentanspruch 32 ist ebenfalls ein Molchkörper mit beidseits eines Abschnitts kleineren Durchmessers vorgesehenen ringförmigen Dichtflächen vorgesehen, dessen Außendurchmesser größer ist als der Innendurchmesser der zu molchenden Rohrleitung. Ferner werden die Dichtflächen von einer im Querschnitt U-förmigen Manschette aus nachgiebigem Material gebildet, deren Schenkel in einer Ringnut des Molchkörpers einsitzen. Innerhalb der Manschette ist ein Ring aus elastomerem Material angeordnet, der sich radial innen am Boden der Ringnut abstützt. Der Molchkörper kann nach einer weiteren Ausgestaltung der Erfindung einen koaxial angeordneten Hohlzylinder aufweisen, der den Boden der Ringnut bildet, während die Wände der Ringnut von Endabschnitten des Molchkörpers und einem Abstützring gebildet sind, wobei der Abstützring auf dem Hohlzylinder sitzt und in Anlage an den Manschetten ist. Darüber hinaus sind Spannmittel vorgesehen, welche die Endabschnitte aufeinander zu vorspannen. Die Spannmittel können mit den Endabschnitten in Verbindung stehende Scheiben sein, die mit einer koaxialen Gewindebohrung versehen sind. In den Gewindebohrungen sitzt ein Gewindestift, so dass eine Verdrehung der Endabschnitte dazu führt, dass diese in einer Drehrichtung aufeinander zu bewegt werden, um die Teile des Molchkörpers gegeneinander zu spannen.

Bei allen Molchkörpern der erfindungsgemäßen Bauart ist es zweckmäßig, wenn die Endflächen ballig oder kugelabschnittsförmig sind. Es hat sich jedoch herausgestellt, dass es eine Verbesserung darstellt, wenn die balligen Endflächen des Molchkörpers nahe der angrenzenden Dichtfläche eine schwach konkave konzentrisch umlaufende Hohlkehle aufweisen. Mit einem derartigen Molchkörper können Spalten leichter überfahren und ein besseres "Einfädeln" erhalten werden, beispielsweise im Bereich eines T-Ringschiebers. Außerdem wirkt eine solche Formgebung einem "Aquaplaning" entgegen. Sonst kann es geschehen, dass aufgrund des Strömungsdruckes und der Relativgeschwindigkeit sich Flüssigkeit zwischen der Rohrleitungswandung und den Dichtflächen legt. Eine solche Erscheinung muss beim Molchen unbedingt verhindert werden.

Die Erfindung wird nachfolgend anhand von in Zeichnungen dargestellten Ausführungsbeispielen näher erläutert.
- Fig. 1: zeigt einen Schnitt durch eine erste Ausführungsform eines erfindungsgemäßen Rohrleitungsmolchs.
- Fig. 2: zeigt eine Seitenansicht teilweise im Schnitt einer zweiten Ausführungsform eines Rohrleitungsmolchs nach der Erfindung.
- Fig. 3: zeigt einen Schnitt durch eine dritte Ausführungsform eines Rohrleitungsmolchs nach der Erfindung.
- Fig. 4: zeigt in Seitenansicht teilweise im Schnitt eine vierte und fünfte Ausführungsform eines Rohrleitungsmolchs nach der Erfindung.
- Fig. 5: zeigt einen Teilschnitt durch eine sechste Ausführungsform eines Rohrleitungsmolchs nach der Erfindung.
- Fig. 6: zeigt einen Teilschnitt durch eine siebte Ausführungsform eines Rohrleitungsmolchs nach der Erfindung.
- Fig. 7: zeigt einen Schnitt durch eine achte Ausführungsform eines Rohrleitungsmolchs nach der Erfindung.

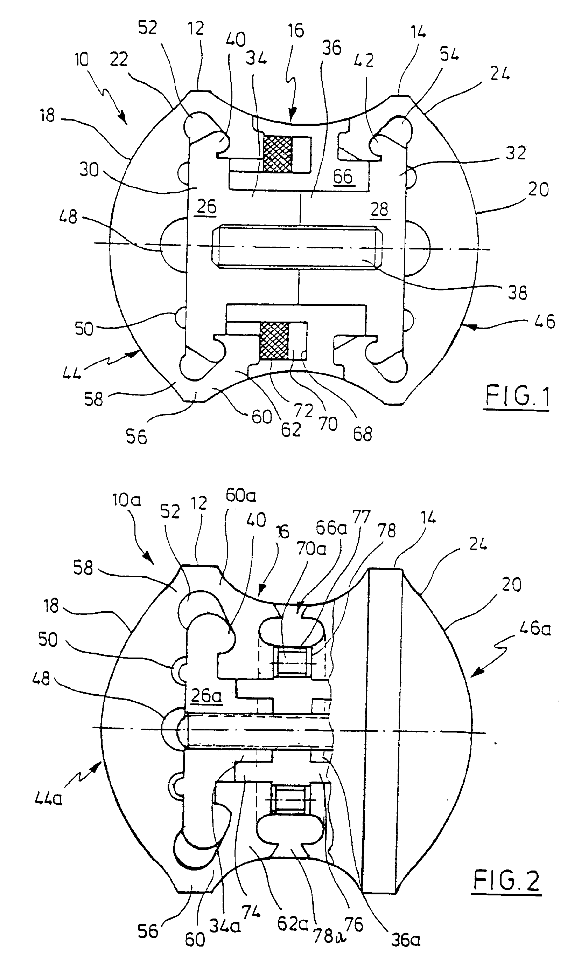

Der Molch 10 nach Fig. 1 gleicht einem Rohrleitungsmolch gemäß DE 30 32 532 in seiner äußeren Gestalt. Er entspricht einem auseinander gezogenen Kugelmolch, hat mithin eine Länge, die ausreicht, Spalten zu überfahren. Er weist zwei ringzylindrische Dichtflächen 12, 14 auf, die einen Abstand haben, der kleiner ist als der Innendurchmesser der zu molchenden Rohrleitung. Zwischen den Dichtflächen 12, 14 befindet sich eine ringförmige konkave Einschnürung 16, und die Endflächen 18, 20 sind kugelabschnittsförmig mit einer ringförmigen schwach konkaven Hohlkehle 22, 24 nahe den Dichtflächen 12, 14. Der in seiner Kontur derart beschriebene Molchkörper besteht jedoch aus mehreren Einzelteilen, die nachfolgend erläutert werden sollen.

Der Kern des Molchkörpers nach Fig. 1 wird von zwei Stützabschnitten 26, 28 gebildet, welche einen scheibenförmigen Abschnitt 30, 32 und einen axialen zylindrischen Abschnitt 34 bzw. 36 aufweisen. Die Stützabschnitte 26, 28 sind mit einer koaxialen Gewindebohrung versehen, in der ein Gewindestift 38 eingeschraubt ist. Mit Hilfe dieser Anordnung können die Stützabschnitte 26, 28 aufeinander zu bewegt werden bis zur Anlage der Abschnitte 34, 36 aneinander. Die scheibenförmigen Abschnitte 30, 32 sind mit einem schräg nach außen weisenden ringförmigen Wulst 40, 42 versehen.

Die Dichtflächen 12, 14 und die Endflächen 18, 20 werden an Kappen 44, 46 gebildet, die aus einem elastomeren Material bestehen. Die Stützabschnitte 26, 28 bestehen hingegen aus einem nicht verformbaren Material, beispielsweise aus einem harten Kunststoff, aus einer Leichtmetalllegierung oder dergleichen. Die Kappen 44, 46 legen sich mit einer senkrecht zur Längsachse des Molchs 10 verlaufenden inneren oder rückseitigen Fläche gegen die zugeordnete ebene Fläche der scheibenförmigen Abschnitte 30, 32 an. In die beschriebene Fläche der Kappen 44, 46 sind mittig eine halbkugelige Ausnehmung 48 und eine konzentrische Ringnut 50 eingeformt. Die Ringnut 50 ist im Querschnitt halbkreisförmig. Radial ausgerichtet zu den Dichtflächen 12, 14 ist ein Ringraum 52, 54 von innen in die Kappen 44, 46 eingeformt. Durch die Formgebung des Ringraums 52, 54 werden ein ringartiger Abschnitt 56 radial innerhalb der Dichtflächen 12, 14 und im Querschnitt zwei stegförmige Abschnitte 58, 60 gebildet, welche in Richtung Dichtfläche 12, 14 konvergieren und welche den Ringabschnitt 56 abstützen. Da der Durchmesser der Dichtflächen 12, 14 größer ist als der der zu molchenden Rohrleitung, beispielsweise 5% und mehr, erfolgt beim Einsetzen des Molches 10 in die Rohrleitung eine Kompression im Bereich der Dichtflächen 12, 14. Der Ringraum 52, 54 erleichtert die hierbei stattfindende Verformung der Kappen 44, 46. Wird ein Treibdruck zum Beispiel auf die Endfläche 18 ausgeübt, kommt es außerdem zu einer axialen Verformung der Stegabschnitte 58, 60, indem der Stegabschnitt 60 sich etwas aufrichtet und der Stegabschnitt 58 sich etwas absenkt. Auf diese Weise wird die Anpressung der Dichtflächen 12, 14 an die Rohrleitungswandung noch verstärkt.

Ein Abschnitt des Ringraums 52, 54 ist komplementär zum Ringwulst 40, 42 gebildet, so dass an dieser Stelle ein Hinterschnitt erzeugt ist, der bewirkt, dass die Wandung 62 der Kappen 44, 46 radial gesichert ist. Die Außenseite der Kappenwandung 62 bildet einen Teil der bereits erwähnten konkaven Einschnürung 16.

Ein ringförmiger Magnethalter 66 umgibt die axialen Bunde 34, 36 der Stützabschnitte 26, 28. Der ringförmige Magnethalter 66 ist im Querschnitt annähernd Doppel-T-förmig, wobei der äußere Steg den mittleren Bereich der konkaven Einschnürung 16 bildet. Zur Seite hin offene Taschen 68, die im Umfangsabstand angeordnet sind, dienen zur Aufnahme von Permanentmagneten 70. Stopfen 72 halten die Permanentmagnete 70 in den Taschen 68. Die Stopfen 72 werden durch einen entsprechenden Endabschnitt der Kappe 44 gesichert.

Die Kappen 44, 46 in Fig. 1 sind zwar etwas unterschiedlich geformt gezeigt. Dies ist jedoch keine Voraussetzung. Sie können auch identisch sein. Sie können vor allen Dingen von den Stützabschnitten 26, 28 gelöst werden, indem diese voneinander fort geschraubt werden. Dadurch wird der Magnethalter 66 zugänglich. Dadurch können die Wandabschnitte 62 der Kappen 44, 46 aus dem Hinterschnitt befreit und abgezogen werden. Identische Kappen können auf die Stützabschnitte 26, 28 aufgesetzt werden.

Die Ringnut 50 und die Ausnehmung 48 dienen ebenfalls einem Nachgeben des Materials bei größerem Kompressionsdruck und zur Aufnahme von verdrängtem Fluid in den Ringräumen 52, 54. Da mit Hilfe der Stützabschnitte 26, 28 die Kappen 44, 46 fest gegen den Molchkörper 66 gespannt sind, wird auch eine ausreichende Abdichtung erzielt, welche verhindert, dass flüssiges Medium in das Innere des Molches eintritt.

Die Magnete 70 liegen nahe der Außenseite des Molchkörpers, können daher von einem geeigneten Detektor gut erfasst werden. Gleichwohl sind sie bei einer Zerstörung des Molches ausreichend gesichert.

Da die Kappen 44, 46 auswechselbar anbringbar sind, können mit der identischen Stützkonstruktion und einem identischen Magnetträger Kappen unterschiedlichen Materials verwendet werden, je nach Durchmesser der zu verwendenden Rohrleitung, des zu verwendenden Mediums, der Qualität der Rohrleitung usw.

Der in Fig. 2 dargestellte Rohrleitungsmolch 10a gleicht im Hinblick auf die Kappen und die Stützkonstruktion weitgehend demjenigen nach Fig. 1. Es werden daher gleiche Teile mit gleichen Bezugszeichen versehen, denen jedoch ein Index a hinzugefügt ist.

Man erkennt in Fig. 2 einen ring- oder scheibenförmigen Magnethalter 66a (zweiteilig mit Außenring 78a und mit Durchbrechungen versehener Innenscheibe) mit axialen Bunden 74, 76 auf gegenüberliegenden Seiten, in die Bunde 34a bzw. 36a der Stützabschnitte formschlüssig eingreifen. In einem radial weiter innen liegenden Abschnitt ist der Magnethalter 66a von einer Reihe von achsparallelen Durchbrechungen versehen, die mit 78 bezeichnet sind und die Permanentmagnete 70a aufnehmen. Die Durchbrechungen 78 sind durch plättchenartige Verschlüsse am Ort 78 auf beiden Seiten verschlossen. Weiter radial außen ist der Magnethalter 66a mit einer Ausbuchtung zu beiden Seiten hin versehen, die sich ringartig um den Halter erstreckt, an die sich ein im Querschnitt schwalbenschwanzförmiger Abschnitt anschließt. Die Wandung 62a der Kappen 44a, 46a ist komplementär zu den beschriebenen Bereichen ausgebildet und daher durch zwei bzw. drei Hinterschnitte radial gesichert. Im Übrigen stimmt die Stützkonstruktion der Ausführungsform nach Fig. 2 mit der nach Fig. 1 überein.

Auch bei der Ausführungsform nach Fig. 2 ist der Magnethalter 66a aus einem geeigneten stabilen Material, beispielsweise Kunststoff oder Metall geformt, wobei sich versteht, dass bei der Verwendung von Metall ein nicht magnetischer Stoff verwendet wird. Die Außenfläche des Magnethalters 66a kann mit einer Codierung versehen werden, durch welche der Molch 10a individualisiert wird. Das Gleiche ist auch möglich bei dem Magnethalter 66 der Ausführungsform nach Fig. 1.

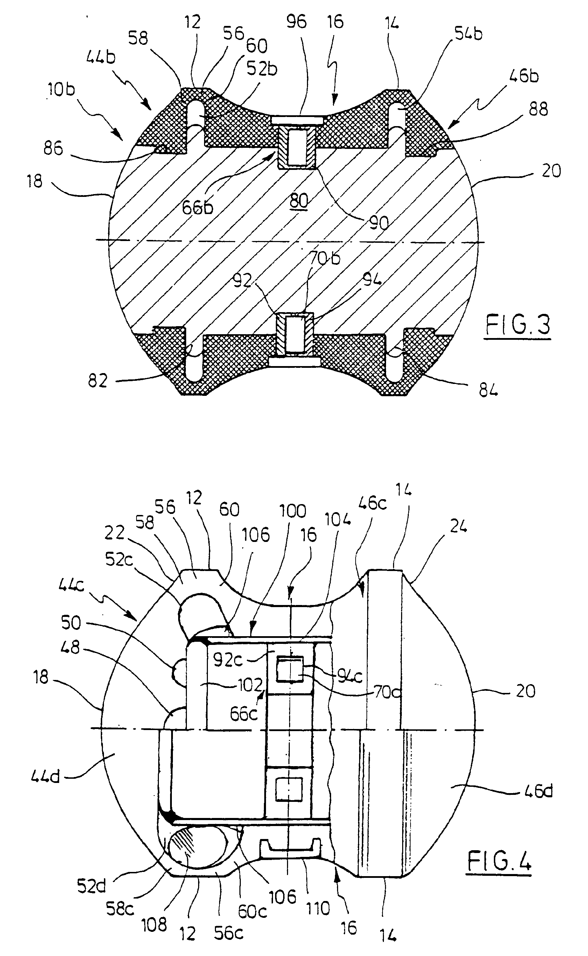

Der Molch 10b nach Fig. 3 weist einen durchgehenden Stützkörper 80 aus einem geeigneten Kunststoff oder metallischen Material auf, der an den Enden zum Teil die balligen Endflächen 18, 20 bildet. Der Rest der Endflächen 18, 20 wird gebildet an Kappen 44b bzw. 46b, die aus elastomerem Material bestehen und auf dem Stützkörper 80 angebracht sind. Zu diesem Zweck weist der massive im Wesentlichen zylindrische Stützkörper 80 zwei radiale Ringflansche 82, 84 auf, die in den Ringnuten 52b bzw. 54b der Kappen 44b, 46b eingreifen, die, ausgerichtet zu den Dichtflächen 12, 14 und in radialem Abstand zu diesen geformt ist. Ferner weist der Stützkörper 80 zwei Ringnuten 86, 88 auf, in die entsprechende Abschnitte der Kappen 44b, 46b eingreifen. Auf diese Weise sind die Kappen 44b, 46b, die unter vorübergehender Verformung auf dem Stützkörper 80 aufgebracht werden, formschlüssig gesichert. In einer mittleren Ringnut 90 im Stützkörper 80 sitzt ein ringförmiger Magnethalter 66b, der aus zwei im Querschnitt U-förmigen Ringen 92, 94 besteht, die gegeneinander gesetzt sind und zwischen sich Aufnahmetaschen für Permanentmagnete 70b bilden. Die angrenzenden Bereiche der Kappen 44b, 46b liegen an die Ringe 92, 94 gepreßt an und sichern den Magnethalter 66b auf diese Weise. Eine radiale Sicherung wird außerdem durch einen Haltering 96 erzielt, der unter Spannung um den Magnethalter 66b herum gelegt ist und in entsprechende Ausnehmungen der Kappen 44b, 46b eingreift. Die Wirkungsweise des Molchs nach Fig. 3 entspricht im Wesentlichen der der Ausführungsformen nach den Figuren 1 und 2. Daher soll diese im Einzelnen nicht nochmals erläutert werden.

In Fig. 4 sind zwei Ausführungsformen in einer Zeichnung dargestellt, wobei zunächst die obere erläutert werden soll. Der dargestellte Molch weist Kappen 44c, 46c aus elastomerem Material auf, die ähnlich den Kappen nach den Figuren 1 und 2 geformt sind. Die Kappen 44c, 46c sind auf einen hohlzylindrischen Stützkörper 100 unter Spannung aufgeschoben, wobei die innere Seite der Kappen 44c, 46c gegen die stirnseitige Wand 102 des Stützkörpers 100 anliegt und die Zylinderenden der Kappen 44c, 46c stumpf gegeneinander stoßen, wie dargestellt. Eine radiale Erhebung an der Außenseite des Mantels 104 des Stützkörpers 100, welche mit dem Bezugszeichen 106 versehen ist, greift in den Ringraum 42c ein, der ähnlich wie der Ringraum 52 nach Fig. 1 oder 2 ausgebildet ist, allerdings ohne den dort gezeigten Hinterschnitt. Für die Flexibilität oder Elastizität des Dichtungsabschnitts unterhalb der Dichtfläche 12 hat dies jedoch keine Bedeutung.

Die Kappen 44c, 46c können, wie beschrieben, in der gezeigten Art und Weise sicher auf dem Stützkörper 100 gehalten werden und auch wieder demontiert werden, falls erforderlich, etwa nach Verschleiß.

Wie erkennbar, ist der Stützkörper eine Schweißkonstruktion, bei der die Endplatten 102 gegen den Mantel 104 geschweißt sind. Bevor dies geschieht, wird der Magnethalter 66c, der zum Beispiel ebenfalls aus verschweißbarem Material und aus zwei Ringen 92c, 94c besteht für die Aufnahme von Permanentmagneten 70c, ähnlich der Ausbildung gemäß Fig. 3 eingefügt. Die beschriebene Anordnung der Magnete ist besonders gegen äußere Einwirkungen geschützt. Es versteht sich, dass sowohl das Material des Stützkörpers 100 als auch des Magnethalters 66c nicht magnetisch sind.

Der Stützkörper bei der unteren Darstellung in Fig. 4 entspricht dem des Stützkörpers 100. Dies trifft auch auf den Magnethalter zu. Es wird daher darauf verzichtet, hierzu nähere Ausführungen zu machen.

Die Kappen 44d, 46d sind aus einem härteren Material, beispielsweise einem Thermoplast wie PTFE. Sie weisen einen inneren Ringraum 52c auf, der im Querschnitt kreisbogenförmig ist und der den Endabschnitt des Stützkörpers 100 umgibt. In den Ringraum 52c ist ein Ring 108 aus elastomerem Material eingelegt, der sich am Mantel 104 des Stützkörpers 100 abstützt. Der Dichtungsbereich unterhalb der Dichtfläche 12 verhält sich wiederum ähnlich den entsprechenden Bereichen bei den Ausführungsformen nach den Figuren 1 bis 3. Das gewählte Material ist jedoch wenig elastisch. Die Elastizität wird daher durch den elastomeren Ring 108 bereitgestellt. Das Verhalten des Dichtungsbereiches dieser Ausführungsform gleicht jedoch derjenigen der oben beschriebenen. Eine Besonderheit bei der Ausführungsform nach Fig. 4 unten besteht darin, dass die beiden Kappen 44d, 46d durch einen im Querschnitt U-förmigen Haltering 110 zusammengehalten sind, dessen Schenkel (Querschnitt) in entsprechende Ringnuten der Kappen 44d, 46d eingreifen. Die Anordnung des Magnethalters 66d ist wiederum vergleichbar der nach Fig. 4 oben oder nach Fig. 3. Bezüglich der Magnethalter der bisher beschriebenen Figuren ist zu bemerken, dass sie sich in der neutralen Achse des Molches befinden, so dass in dem Magnethalterbereich keine wesentlichen Verformungskräfte auf diesen einwirken. Es sei noch erwähnt, dass der Haltering 110 wiederum mit einer außen sichtbaren Codierung versehen werden kann, die mit dem bloßen Auge oder auch von Detektoren gelesen werden kann.

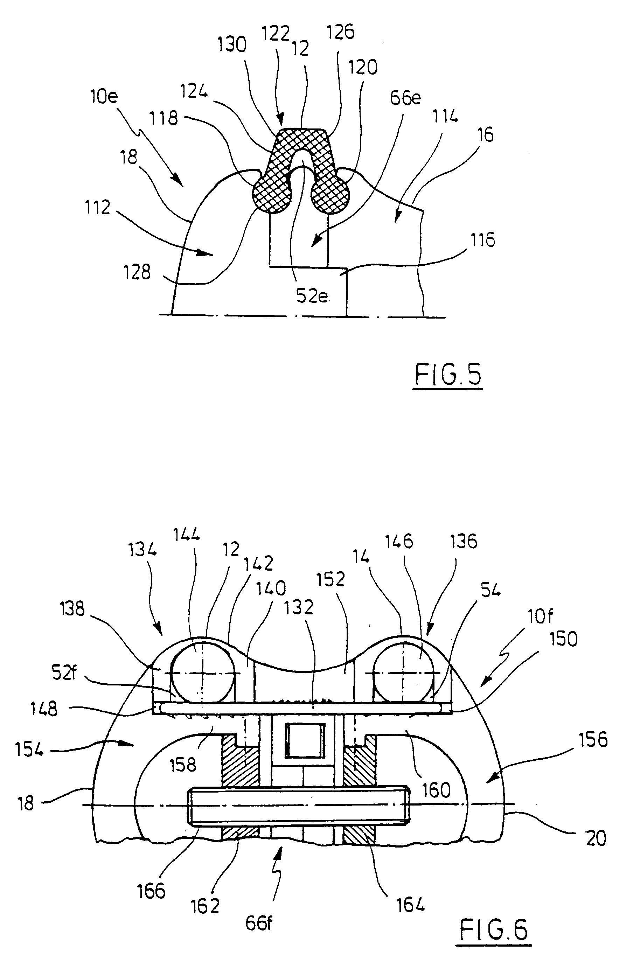

Bei der Ausführungsform nach Fig. 5 ist im Ausschnitt ein Molch 10e angedeutet, auf dessen Aufbau im Einzelnen nicht näher eingegangen werden soll. Man erkennt ein Endstück 112, das die Endfläche 18 bildet, ein Mittelstück 114 mit der Einschnürung 16 und einen Magnethalter 66e, der einen axial ausgerichteten Bund 116 oder Zylinder des Endstücks 112 umgibt und der zusammen mit den benachbarten Teilen zwei annähernd parallele Aufnahmenuten 118, 120 bildet, die im Schnitt kreisförmig sind mit einem ringförmigen radialen Spalt, der nach außen geöffnet ist. Durch diese Anordnung kann eine im Querschnitt annähernd U-förmige ringförmige Manschette 122 angebracht werden, deren Schenkel 124, 126 an den Enden eine wulstartige Verdickung 128 aufweisen. Mit der Verdickung werden die Schenkel 124, 126 in den Nuten 118, 120 im Molchkörper festgelegt, indem die Teile 112 und 114 durch geeignete Mittel axial fest gegeneinander gespannt werden. Solche Mittel sind hier nicht dargestellt und können zum Beispiel denen nach den Figuren 1 und 2 entsprechen.

Die Schenkel 124, 126 konvergieren nach außen zum ringförmigen Steg 130. Diese Anordnung entspricht im Grunde dem Bereich des Molches nach den Figuren 1 bis 4 unterhalb der Dichtfläche 12, 14. Auch bei der Ausführungsform nach Fig. 5 ist ein Ringraum 52e gebildet, der ein Nachgeben der Manschette 122 beim Einsetzen des Molches in die im Durchmesser kleinere Rohrleitung ermöglicht. Die Schenkel 124, 126 verhalten sich dabei wie die Stegabschnitte 58, 60 der Ausführungsform nach den Figuren 1 bis 4.

Bei der Ausführungsform nach Fig. 6 ist ein Hohlzylinder 132 als Stützkörper vorgesehen, der zum Beispiel aus Metall oder Kunststoff besteht und nicht magnetisch ist. Der Stützkörper 132 wird von zwei im Querschnitt U-förmigen Manschetten 134, 136 umgeben, deren Schenkel 138, 140 sich auf der Außenseite des Stützkörpers 132 abstützen und deren Steg 142 die Dichtfläche 12, 14 bildet. Diese ist im gezeigten Fall nicht ringzylindrisch, wie in den Ausführungsformen nach den Figuren 1 bis 5, sondern leicht konvex gewölbt. Die Manschetten 134, 136 bestehen aus einem relativ festen Material, beispielsweise PTFE, das zwar nachgiebig ist, jedoch eine geringe Elastizität aufweist. Die Manschetten 134, 136 bilden mit dem Stützkörper 132 zwei Ringräume 52f, 54f, welche zwei im Querschnitt kreisförmige Ringe 144, 146 aus einem elastomeren Material aufnehmen. Die Ringe stützen sich dabei außen an der Innenseite der Stege 142 und auf der Innenseite am Stützkörper 132 ab.

Die Anordnung aus Manschetten 134, 136 und Elastomerringen 144, 146 ist in Ringnuten 148, 150 aufgenommen, die gebildet ist von dem Stützkörper 132 und jeweils einer Stirnfläche eines Zwischenkörpers 152 und der jeweiligen Rückseite von schalenartigen Endabschnitten 154, 156. Die schalenförmigen Endabschnitte 154, 156 sind aus festem Material, z.B. aus Kunststoff oder einem Metall geformt. Sie haben zylinderförmige Wandabschnitte 158, 160, die eine ringförmige Ausnehmung am Umfang aufweisen, durch welche die besagte Nutwand in Richtung balliger Endfläche 18 bzw. 20 hin gebildet ist und in welche hinein der Stützkörper 132 eingeschoben ist, wie in Fig. 6 zu erkennen.

Innerhalb der Wandabschnitte 158, 160 sind Scheiben 162 bzw. 164 angeordnet, die durch eine entsprechende Hinterschneidung gehindert sind, aus dem Inneren der Schalen 154, 156 herausgedrückt zu werden. Die Scheiben 162, 164 haben jeweils eine Gewindebohrung, in denen ein gemeinsamer Gewindestift 166 eingeschraubt ist. Durch Verschrauben der linken und rechten Hälfte in des gezeigten Molches 10f werden die Hälften aufeinander zu bewegt und klemmen das Mittelstücks 152 ein, das mit einer entsprechenden Pressung gegen die zugeordneten Schenkel 140 der Manschetten 134, 136 anliegt. Ein Magnethalter 66f ist innerhalb des Stützkörpers 132 angeordnet, vergleichbar der Anordnung des Magnethalters 66c nach Fig. 4. Daher wird hierauf auch nicht weiter eingegangen.

Statt einer Manschette aus PTFE oder dergleichen Material kann auch eine aus elastomerem Material verwendet werden, wobei dann die elastomeren Ringe 144, 146 entbehrlich sind. Auch in dem gezeigten Ausführungsbeispiel nach Fig. 6 verhält sich der Bereich neben und unterhalb der Dichtfläche 12 ähnlich den entsprechenden Bereichen bei den voranstehend beschriebenen Ausführungsformen.

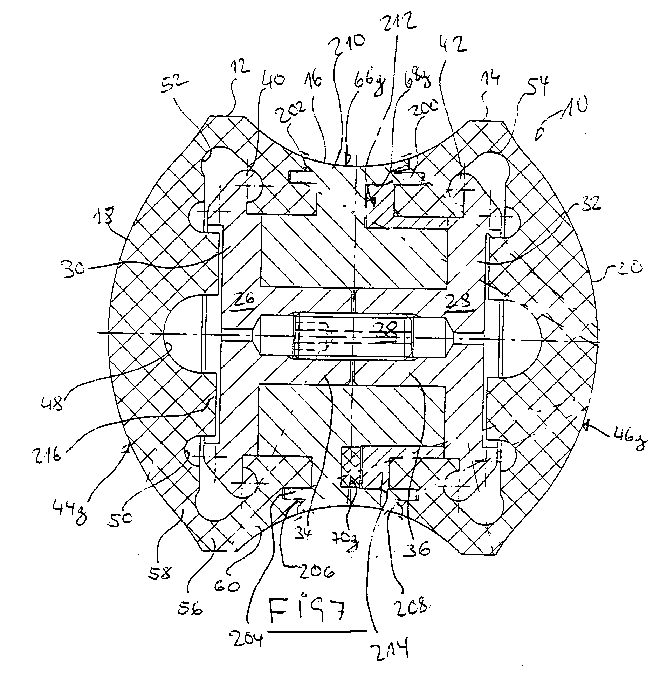

Die Ausführungsform nach Fig. 7 gleicht weitgehend der nach Fig. 1, so daß gleiche Teile mit gleichen Bezugszeichen versehen werden können. Abweichende Teile bzw. Abschnitte sind mit den Zusatz g versehen. Die Besonderheit der Ausführungsform nach Fig. 7 liegt in der Ausbildung des Magnethalters 66g und der entsprechend ausgeformten Kappen 44g 46g auf der dem Magnethalter 66g zugewandten Seite.

Ähnlich wie bei der Ausführungsform nach Fig. 1 ist der Magnethalter 66g im Schnitt grob doppel-T-förmig geformt. Der axial gerichtete Bund 200 (im Schnitt als Stege sichtbar) greift in komplementäre axial gerichtete Ringnuten 202 der Kappen 44g, 46g ein, wie in der Fig. deutlich zu erkennen ist. An die Stirnseiten des ringsum verlaufenden Stegs 200 ist eine Sägezahnung 204 geformt, welche mit den Grund der Nuten 202 zusammenwirkt, um eine Rückdrehung der beiden Molchhälften zu verhindern. Zu diesem Zweck ist die flache Flanke der Sägezahnung 204 in Drehrichtung weisend und die steile Zahnung entgegengesetzt der Drehrichtung weisend, wenn als Drehrichtung das Zusammendrehen der beiden Molchhälften betrachtet wird, was vorzugsweise im Uhrzeigersinn vor sich geht. Es ist nicht erforderlich, die Zahnung am gesamten Umfang der Stirnflächen vorzusehen, vielmehr können einzelne gezahnte Abschnitte vorgesehen sein.

Die außen liegende Kante 206 der Ringnuten 202 ist im Querschnitt dreieckförmig und greift in eine komplementäre Ringnut 208 der Kappe 44g, 46g dichtend ein. Auf diese Weise ist eine Abdichtung des Molches gegenüber seinem Inneren geschaffen, wobei der gegenüber der Ringnut 208 außen liegende Abschnitt 210 des Magnethalters 66g den Zwischenraum zwischen den zugekehrten Kappenabschnitten dichtend abschließt.

In einzelnen, axial angeordneten und über den Umfang gleichmäßig verteilten Taschen 68g werden die Permanentmagneten 70g aufgenommen. Die Taschen 68g werden durch Einsätze 212 verschlossen, die in Form einer gestuften Hülse ausgebildet sind und den Zwischenraum zur benachbarten Kappe 46g abschließt. Eine im Querschnitt dreieckige Rippe 214 auf der Außenseite des Einsatzes 212 greift in die zugekehrte Wandung des Steges 200 ein, um eine entsprechende Absicherung und Abdichtung zu gewährleisten.

## Patentansprüche

1. Rohrleitungsmolch mit einem länglichen Molchkörper, bei dem
- beidseits eines Abschnitts kleineren Durchmessers (66) (Mittelteil) jeweils eine ringförmige, vorzugsweise ringzylindrische Dichtfläche (12, 14) vorgesehen ist, deren Außendurchmesser größer ist als der Innendurchmesser der zu molchenden Rohrleitung
- bei dem ferner ein Ringhohlraum (52, 54) annähernd radial innen von der Dichtfläche (12, 14) und zur Dichtfläche (12, 14) ausgerichtet in radialem Abstand zu dieser vorgesehen ist,
- wobei zumindest der den Ringhohlraum (52, 54) begrenzende und die Dichtfläche (12, 14) bildende zusammenhängende Abschnitt des Molchkörpers aus elastomerem Material geformt ist und wobei
- der Ringhohlraum (52, 54) und die Dichtfläche (12, 14) so angeordnet und ausgebildet sind, dass die Dichtfläche (12, 14) an einem ringförmigen Abschnitt (56) ausgebildet ist, der an zwei im Querschnitt stegförmigen nach innen weisenden Abschnitten (58, 60) angebunden und von diesen getragen ist und die axial und radial verformt werden, wenn die Dichtfläche (12, 14) mit einer Rohrwandung in Eingriff tritt.

2. Rohrleitungsmolch nach Anspruch 1, **dadurch gekennzeichnet, dass** die stegförmigen Abschnitte (58, 60) radial nach außen konvergieren derart, dass beim Eingriff mit der Rohrleitungswandung und beim Vortrieb der in Vortriebsrichtung vorn liegende stegförmige Abschnitt aufgerichtet und der andere stegförmige Abschnitt abgesenkt wird.

3. Rohrleitungsmolch nach Anspruch 1 oder 2, **dadurch gekennzeichnet, dass** der ringförmige Abschnitt und die stegförmigen Abschnitte Teile eines einteiligen Rings (122) aus elastomerem Material sind, der im Querschnitt U-förmig ist, wobei die Enden seiner Schenkel (66e, 124, 126) im Molchkörper festgelegt sind.

4. Rohrleitungsmolch nach Anspruch 3, **dadurch gekennzeichnet, dass** die Schenkelenden eine wulstförmige Verdickung (128) aufweisen, die zwischen scheibenförmigen Abschnitten (112, 114) des Molchkörpers axial eingespannt sind.

5. Rohrleitungsmolch nach Anspruch 1 oder 2, **dadurch gekennzeichnet, dass** der Molchkörper zwei identische einteilige Kappen (44, 46, 44a, 46a, 44b, 46b, 44c, 46c, 44d, 46d) aus elastomerem Material aufweist, welche zumindest einen Teil der Außenkontur des Molchkörpers definieren und jeder Kappe ein Stützabschnitt aus im Wesentlichen nicht verformbarem Material zugeordnet ist.

6. Rohrleitungsmolch nach Anspruch 5, **dadurch gekennzeichnet, dass** zwischen den endseitigen Abschnitten der Kappen (44, 46, 44a, 46a) und dem Stützabschnitt (26, 28, 26a, 28) ein oder mehrere Hohlräume (48, 50) vorgesehen sind.

7. Rohrleitungsmolch nach Anspruch 5 oder 6, **dadurch gekennzeichnet, dass** die Kappen (44, 46, 44a, 46a, 44b, 46b, 44c, 46c, 44d, 46d) lösbar am Stützabschnitt, am Stützkörper oder am Molchkörper angebracht sind.

8. Rohrleitungsmolch nach einem der Ansprüche 5 bis 7, **dadurch gekennzeichnet, dass** ein axial erstreckter einteiliger Stützkörper (80, 100) den Kern des Molchkörpers bildet, an dem die Kappen (44b, 46b, 44c, 46c, 44d, 46d) lösbar angebracht sind.

9. Rohrleitungsmolch nach einem der Ansprüche 5 bis 8, **dadurch gekennzeichnet, dass** eine radiale Erhebung (40, 84, 106) des Stützabschnitts oder des Stützkörpers in den Ringraum (52, 54, 52b, 54b) radial von innen her eingreift und die Kappe (44b, 46b, 44c, 46c, 44d, 46d) gegen eine axiale Relativbewegung sichert.

10. Rohrleitungsmolch nach einem der Ansprüche 5 bis 9, **dadurch gekennzeichnet, dass** der Stützabschnitt (26, 28, 26a) einen scheibenförmigen Abschnitt (30, 32) aufweist und mittels eines Hinterschnitts in den Ringraum (52, 54, 52c, 52d) eingreift.

11. Rohrleitungsmolch nach einem der Ansprüche 5 bis 10, **dadurch gekennzeichnet, dass** beide Stützabschnitte (26, 28, 26a) eines Molchkörpers eine achsmittige Gewindebohrung aufweisen, in die ein Gewindestift (38) eingeschraubt ist, so dass die Schrauben aufeinander zu bewegbar sind zur klemmenden Festlegung der Kappen (44, 46, 44a, 46a) an den Stützabschnitten.

12. Rohrleitungsmolch nach Anspruch 8, **dadurch gekennzeichnet, dass** der Stützkörper (80) axial durchgehend ist und die vorderen balligen Endflächen (18, 20) des Molchkörpers bildet.

13. Rohrleitungsmolch nach Anspruch 8 oder 12, **dadurch gekennzeichnet, dass** am Stützkörper (80) radiale Flansche (82, 84), Wülste oder Rippen angebracht oder angeformt sind, die jeweils von radial innen in einen Ringraum (52b, 54b) eingreifen.

14. Rohrleitungsmolch nach Anspruch 8 oder 12 oder 13, **dadurch gekennzeichnet, dass** im Stützkörper (80) konzentrisch zur Längsachse des Molchkörpers Ringnuten (86, 88) geformt sind, in die ein ringförmiger radial nach innen weisender Abschnitt der Kappen (44b, 46b) passend eingreift.

15. Rohrleitungsmolch nach einem der Ansprüche 5 bis 14, **dadurch gekennzeichnet, dass** von den Stützabschnitten (26, 28) bzw. dem Stützkörper (80, 100) ein Magnethalter (66, 66a, 66b, 66c) gehalten ist, der vorzugsweise symmetrisch zur Querachse des Molchkörpers angeordnet ist und mehrere gleichpolig orientierte Permanentmagnete (70, 70a, 70b, 70c) hält, die in gleichmäßigen Abständen auf einem Kreis konzentrisch zur Längsachse des Molchkörpers auf der Längsmitte angeordnet sind.

16. Rohrleitungsmolch nach einem der Ansprüche 11 bis 15, **dadurch gekennzeichnet, dass** der Magnethalter ringförmig ist und in einer Ringnut (90) des Stützkörpers (80) bzw. der Stützabschnitte (26, 28) sitzt.

17. Rohrleitungsmolch nach Anspruch 16, **dadurch gekennzeichnet, dass** zwei schalenförmige im Querschnitt ein seitliches U bildende Ringe (92, 94, 92c, 94c) aus nicht magnetischem Material gegeneinander gesetzt sind und zwischen sich mehrere in Umfangsrichtung beabstandete Taschen zur Aufnahme der Permanentmagnete (70b, 70c) bilden.

18. Rohrleitungsmolch nach Anspruch 16 oder 17, **dadurch gekennzeichnet, dass** der ringförmige Magnethalter (66b) von einem Haltering (96) umgeben ist.

19. Rohrleitungsmolch nach einem der Ansprüche 11 bis 18, **dadurch gekennzeichnet, dass** der Magnethalter (66, 66a, 66b) zwischen den Kappen (44, 46, 44a, 46a, 44b, 46b) eingespannt ist.

20. Rohrleitungsmolch nach Anspruch 19, **dadurch gekennzeichnet, daß** der ringförmige Magnethalter (66g) auf gegenüberliegenden Seiten sich axial erstrekkende Ringflansche (200) aufweist, die in komplementäre Ringnuten (202) der Kappen (44g, 46g) eingreifen und die Ringflansche (200) an der Stirnseite mit einer Zahnung (204) versehen sind, die mit dem Boden der Ringnuten (202) zusammenwirken.

21. Rohrleitungsmolch nach Anspruch 20, **gekennzeichnet durch** eine Sägezahnung, wobei die flache Zahnflanke in Richtung des Zusammenschraubens der Stützabschnitte weist und die steilere Flanke in entgegengesetzter Richtung.

22. Rohrleitungsmolch nach Anspruch 20 oder 21, **dadurch gekennzeichnet, daß** die ringförmige und im Querschnitt vorzugsweise dreieckförmige äußere Kante (208) der Ringnuten (202) in eine komplementäre Ringnut (204) des Magnethalters (66g) dichtend eingreift.

23. Rohrleitungsmolch nach Anspruch 5 und 8, **dadurch gekennzeichnet, dass** ein hohlzylindrischer Stützkörper (100) vorgesehen ist und die Kappen (44c, 46c) auf dem hohlzylindrischen Stützkörper (100) aufgesetzt sind.

24. Rohrleitungsmolch nach Anspruch 23, **dadurch gekennzeichnet, dass** ein radialer Wulst (106) oder dergleichen des Stützkörpers (100) in den Ringhohlraum (52c, 52d) eingreift.

25. Rohrleitungsmolch nach einem der Ansprüche 15 bis 18 und 23, **dadurch gekennzeichnet, dass** der Magnethalter (66c) innerhalb des Stützkörpers (100) befestigt ist.

26. Rohrleitungsmolch nach Anspruch 10 und 15, **dadurch gekennzeichnet, dass** ein axialer Abschnitt (34a) der Stützabschnitte (26a) mit einem mittleren Abschnitt (74) des Magnethalters (66a) in formschlüssigem Eingriff ist.

27. Rohrleitungsmolch nach Anspruch 10 und 15, **dadurch gekennzeichnet, dass** ein radial äußerer umlaufender Abschnitt des Magnethalters (66a) über einen Hinterschnitt mit der Kappe (44a, 46a) zusammen wirkt.

28. Rohrleitungsmolch nach Anspruch 27, **dadurch gekennzeichnet, dass** der Abschnitt des Magnethalters (66a) im Querschnitt schwalbenschwanzförmig (78) ist und die Kappen (44a, 46a) dazu komplementär ausgebildet sind.

29. Rohrleitungsmolch nach Anspruch 15 und 16, **dadurch gekennzeichnet, dass** der Magnethalter (66) seitlich zugängliche achsparallele Taschen (68) für die Permanentmagnete (70) aufweist, die in gleichmäßigen Umfangsabständen auf einem Kreis konzentrisch zur Längsachse des Molchkörpers angeordnet sind und die Permanentmagnete (70) in den Taschen nach der Montage des Molchkörpers von einem Verschlussstopfen (72) und/oder einem Abschnitt der zugeordneten Kappe (44, 46, 44a, 46a) axial gesichert sind.

30. Rohrleitungsmolch nach einem der Ansprüche 15 bis 29, **dadurch gekennzeichnet, dass** ein außen liegender Ringbereich des Magnethalters (66, 66a) oder eines Halterings (96) für den Magnethalter (66b) eine Codierung trägt.

31. Rohrleitungsmolch nach einem der Ansprüche 5 bis 30, **dadurch gekennzeichnet, dass** die Kappe (44d, 46d) aus einem relativ steifen Material besteht und im Ringhohlraum (52d) ein Ring (108) aus elastomerem Material angeordnet ist, der sich innen an einem Stützabschnitt bzw. am Stützkörper (100) abstützt.

32. Rohrleitungsmolch nach einem der Ansprüche 1 bis 31, **dadurch gekennzeichnet, dass** der Ringhohlraum (52, 54, 52b, 54b, 52c, 52e) ein Fluid unter Druck enthält.

33. Rohrleitungsmolch nach Anspruch 32, **dadurch gekennzeichnet, dass** im Ringraum ein Gas unter Druck eingefüllt ist.

34. Rohrleitungsmolch mit einem länglichen Molchkörper, bei dem
- beidseits eines Abschnitts kleineren Durchmessers jeweils eine ringförmige Dichtfläche (12, 14) vorgesehen ist, deren Außendurchmesser größer ist als der Innendurchmesser der molchbaren Rohrleitung
- bei dem ferner die Dichtflächen (12, 14) von einem äußeren Steg (142, 146) einer im Querschnitt U-förmigen Manschette (134, 136) aus nachgebendem Material gebildet sind, deren Schenkel (138, 140) in einer Ringnut (148, 150) des Molchkörpers einsitzen und innerhalb der Manschette (134, 136) ein Ring (144, 146) aus elastomerem Material angeordnet ist, der sich radial innen am Boden der Ringnut abstützt.

35. Rohrleitungsmolch nach Anspruch 34, **dadurch gekennzeichnet, dass** der Molchkörper einen koaxial angeordneten Hohlzylinder (132) aufweist, der den Grund der Ringnut bildet, während die Wände der Ringnut von Endabschnitten (154, 156) des Molchkörpers und einem Abstandsring (152) gebildet sind, wobei der Abstandsring (152) auf dem Hohlzylinder (132) sitzt und in Anlage an den Manschetten (134, 136) ist und Spannmittel vorgesehen sind, welche die Endabschnitte (154, 156) aufeinander zu vorspannen.

36. Rohrleitungsmolch nach Anspruch 35, **dadurch gekennzeichnet, dass** die Spannmittel jeweils eine Scheibe (162, 164) in den Endabschnitten (154, 156) mit koaxialer Gewindebohrung aufweisen und einen Gewindestift (166) in den Gewindebohrungen.

37. Rohrleitungsmolch nach Anspruch 35 oder 36, **dadurch gekennzeichnet, dass** ein Magnethalter innerhalb des Hohlzylinders (132) angebracht ist, der auf einem Kreis konzentrisch zur Längsachse des Molchkörpers in gleichmäßigen Umfangsabständen Permanentmagnete hält.

38. Rohrleitungsmolch nach Anspruch 36 oder 37, **dadurch gekennzeichnet, dass** die Endabschnitte (154, 156) des Molchkörpers schalenartig sind mit konvexem, die balligen Endflächen (18, 20) bildendem Abschnitt und einem ringzylindrischen Abschnitt (158, 160), der in den Hohlzylinder (132) eingreift.

39. Rohrleitungsmolch nach einem der Ansprüche 1 bis 38, **dadurch gekennzeichnet, dass** in die balligen Endflächen (18, 20) des Molchkörpers nahe der angrenzenden Dichtfläche (12, 14) eine schwach konkave, konzentrisch umlaufende Hohlkehle (22, 24) geformt ist.
